# EUROPÄISCHE PATENTSCHRIFT

(11) **EP 2 467 894 B1**
(45) Veröffentlichungstag und Bekanntmachung des Hinweises auf die Patenterteilung: **07.08.2013**
(21) Anmeldenummer: 10768855.8
(22) Anmeldetag: 20.08.2010
(51) Int. Cl.: H01M 10/04

(54) **VORRICHTUNG ZUR BESTÜCKUNG UND AUSRÜSTUNG VON KFZ-BATTERIEGEHÄUSEN**
DEVICE FOR FITTING AND EQUIPPING MOTOR VEHICLE BATTERY HOUSING
DISPOSITIF POUR MONTER ET ÉQUIPER DES BOÎTIERS DE BATTERIE DE VÉHICULE À MOTEUR

(30) Priorität: 20.08.2009 DE 202009011262 U
(43) Veröffentlichungstag der Anmeldung: 27.06.2012
(73) Patentinhaber: SASIT Industrietechnik GmbH Zwickau, 08056 Zwickau (DE); VB Autobatterie GmbH & Co. KGaA, 30419 Hannover (DE)
(72) Erfinder: MEIER, Jochen, 08118 Hartenstein (DE); DÖRFFEL, Thomas, 08064 Zwickau (DE); LOER, Roger, 30161 Hannover (DE)
(74) Vertreter: Auerbach, Bettina
(86) Internationale Anmeldenummer: PCT/DE2010/000979
(87) Internationale Veröffentlichungsnummer: WO 2011/020469

(56) Entgegenhaltungen:
- EP-A2- 1 637 237
- GB-A- 2 056 160
- US-A- 5 775 871
- US-A- 5 918 725

## Beschreibung

Die Erfindung betrifft eine Vorrichtung zur Bestückung und Ausrüstung von KfZ-Batteriegehäusen als Kompaktanlage, welche aus einzelnen Fertigungsstationen und dazugehörigen Transportvorrichtungen besteht, wobei die zu bearbeitenden Batterieplattenpakete in Spannkassetten angeordnet sind und der Vorrichtung in der notwendigen Paketbreite für die vorgesehenen Batteriezellen durch eine vorgeschaltete Zuführstation bereit gestellt sind.

Zur Fertigung von Kfz-Batterien ist es notwendig, eine Vielzahl von Elektrodenplatten in einzelne im Batteriegehäuse voneinander getrennt angeordnete Batteriezellen einzuordnen. Dabei sind die Elektrodenplatten zu einzelnen Pakten zusammengefasst und den Batteriezellen zugeordnet.
Eine Vorrichtung zum Verbinden von einzelnen Batterieplatten zu Paketen und zum Einsetzen dieser Pakete in Batteriekästen wird in der AT 008 261 U1 beschrieben. Die einzelnen notwendigen Bearbeitungsschritte werden in insgesamt 14 Bearbeitungsstationen durchgeführt, welche nacheinander angeordnet sind. Dadurch kommt es zu einem immensen Platzbedarf für das Errichten einer solchen Anlage und einen immensen Transportbedarf bei der Fertigung.

Aufgabe der Erfindung ist es sowohl für einreihig als auch doppelreihig mit Batteriezellen ausgestattete Batteriegehäuse eine Bestückungsvorrichtung zu schaffen, welche kompakt ausgebildet ist und sich durch einen geringen Platzbedarf auszeichnet und alle notwendigen Arbeitsschritte zur Bestückung und Ausrüstung der Batteriegehäuse in sich vereint, um bei der Fertigung einen Zwischentransport der unfertig bestückten und/oder bearbeiteten Batterieplattenpakete auszuschließen.

Erfindungsgemäß wird die Aufgabe durch die Merkmale des Anspruchs 1 gelöst. Die vorteilhaften Ausgestaltungen sind in den Unteransprüchen beschrieben.

Danach zeichnet sich die erfindungsgemäße Vorrichtung zur Bestückung und Bearbeiten von KfZ-Batteriegehäusen dadurch aus, dass insgesamt vier zum Teil mehrere Arbeitsgänge ausführende Bearbeitungsstationen um einen elektrisch angetriebenen Hub-/Drehtisch angeordnet sind, wobei die vier Bearbeitungsstationen jeweils um 90° versetzt um den zentral angeordneten Hub-Drehtisch herum angeordnet sind.

An der ersten Bearbeitungsstation sind wenigstens ein dem Zuführen von zuvor auf Paketdickenstärke geprüften Batterieplatten bestückten Spannkassetten dienendes Zuführband, ein oder mehrere von oben absenkbare Fahnenausrichter, ein oder mehrere von oben senkbare Fahnenanbieger und ein dem Schwenken der Spannkassetten um 180° dienender und nach dem Senken des Hub-Drehtisches betätigbarer Schwenkmechanismus angeordnet. Der, der ersten Bearbeitungsstation vorgeschalteten Zuführstation ist zur Gewährleistung einer kontinuierlichen Zuführung von batterieplattenbestückten Spannkassetten wenigstens eine Pufferstation zugeordnet.

An der zweiten Bearbeitungsstation ist ein oder mehrere dem Benetzen der Fahnen der Batterieplatten mit Flussmittel (Fluxmittel) dienende und von unten an die Spannkassetten zuführbare Fluxvorrichtungen angeordnet. Desweiteren sind an dieser Bearbeitungsstation wenigstens ein dem Verzinnen der Fahnen der Batterieplatten dienendes, beheiztes und von unten nach oben heb- und senkbares Zinnbad mit einem dem Entfernen des Oxidates dienendem Abstreifer, eine oder mehrere dem Trocknen der verzinnten Fahnen dienende kippbar gelagerte Trocknungseinrichtungen und einem dem Schwenken der Spannkassetten um 180° dienender und nach dem Senken des Hub-Drehtisches betätig barer Schwenkmechanismus angeordnet.

An der dritten Bearbeitungsstation sind wenigstens eine Gießbrückenausstoßvorrichtung mit separater pneumatischer Hubvorrichtung, eine unter der Spannkassette angeordnete beheizbare Bleiform mit integrierten Bleibadkammern und eine für das Eintauchen der mit den Fahnen nach unten gedrehten Spannkassette in das Bleibad dienende Absetz-/Hubvorrichtung angeordnet.

An der vierten Bearbeitungsstation sind wenigstens ein beim Absenken des Hub-Drehtisches betätigbarer Schwenkmechanismus und ein oder mehrere mit wenigstens sechs Greifern ausgestattetes, zu den Spannkassetten absenkbares und der Entnahme der Batterieplattenpakete dienendes Greiferportal, sowie wenigstens ein Einboxrahmen und ein oder mehrere zum Transport und zum Drehen des bereitgestellten Batteriegehäuses dienende und mit einer Drehvorrichtung ausgestattetes Förderbänder angeordnet.

Bei einer größeren Anlage können die mit einer Drehvorrichtung ausgestatteten Förderbänder mehrfach angeordnet sein, so dass die mehrfach angeordneten Greifer gleichzeitig mehrfach einboxen können.
Da die Einboxrahmen öfters gereinigt werden müssen, weist die Anlage an der vierten Bearbeitungsstation eine Wechselstation auf. Dabei werden die Einboxrahmen doppelt nebeneinander angeordnet, wobei einer zum Bestücken zur Verfügung steht und ein weiterer während der Bestückung des anderen seitlich herausgefahren und gereinigt werden kann. Dies erfolgt abwechselnd.

Die einzelnen Bearbeitungsstationen sind nacheinander und dabei jeweils um 90° versetzt um den zentralen Hub-Drehtisch angeordnet.
Taktweise wird gleichzeitig an allen Bearbeitungsstationen gehoben, gedreht und abgesenkt. Das Schwenken der Spannkassetten und die einzelnen Bearbeitungsschritte an den einzelnen Stationen sind auf diesen Rhythmus zeitlich abgestimmt. Dazu ist der Hub-/Drehtisch als Rundschalttisch mit pneumatisch bewegter Hubeinheit ausgebildet.
Von einer zur anderen Bearbeitungsstation wird lediglich die im Kassettenträger befindliche Spannkassette weiter transportiert.
Dazu sind am Hub-/Drehtisch jeweils um 90° versetzt mindestens vier Kassettenträger angeordnet.

Bei den Bearbeitungsstationen 1, 2 und 4 ist es für das mehrfache Bearbeiten der Batterieplatten vorteilhaft, dass an den dort vorgesehenen Schwenkmechanismen jeweils ein dem Drehen der Spannkassetten um 180° dienender pneumatisch betriebener Zahnstangenantrieb angeordnet ist.
Zur Einhaltung der Taktzeiten bei mehrfach ausgelegter Bearbeitungsstation ist es von Vorteil, dass der Bearbeitungsstation 4 zusätzlich eine der gleichzeitigen Positionierung von mindestens zwei leeren bzw. befüllten Batteriegehäusen an der Einboxstation dienende Transfervorrichtung zugeordnet ist. Mittels zusätzlicher Greifer werden mindestens zwei Batteriegehäuse aufgenommen, weitertransportiert und an der gewünschten Stelle abgesetzt, wobei dadurch wenigstens zwei Batteriegehäuse gleichzeitig positioniert werden.

Zur Absicherung einer nachfolgenden Qualitätsprüfung und Dokumentierung ist an der Bearbeitungsstation 4 zusätzlich eine mit einer Waage für das Feststellen und Kontrollieren des Batteriegewichtes und mit einem der Zuordnung des ermittelten Gewichts zur entsprechenden Batterie dienenden Codeleser ausgestattete Kontrollstation zugeordnet.

Fertig bestückte Batteriegehäuse, welche nicht das entsprechende Gewicht aufweisen, werden an dieser Stelle aussortiert.

Um die Taktzeitfrequenz der Anlage effektiv gestalten zu können, ist es weiterhin von Vorteil, dass zwischen der ersten Bearbeitungsstation und der vorgeschalteten Zuführstation für die auf Paketdicke geprüften Batterieplattenpakete ein der Bestückung der Spannkassette dienender Mehrfachgreifer angeordnet ist. Sollte in der Bearbeitungsstation 1 die Spannkassette noch belegt sein, dann wird das Paket auf eine Pufferstation, zum Beispiel als Pufferband ausgebildet, der Zuführvorrichtung abgelegt, von welchem jederzeit bei Bedarf über den Mehrfachgreifer zurückgegriffen werden kann und der Bearbeitungsstation 1 zugeführt werden kann. Der Mehrfachgreifer kann vorteilhafter Weise als Sechsfachgreifer oder als Zwölffachgreifer ausgelegt sein.

Für die in der zweiten Bearbeitungsstation angeordnete Fluxvorrichtung ist es vorteilhaft, einen separaten Antrieb für die jeweils horizontal unter die Spannkassette verfahrbare Walze und die verfahrbare Fluxmittelwanne anzuordnen.
Als separater Antrieb hierfür ist ein mit einer Zahnstange in Verbindung stehender und mit dem Hub-/Drehtisch steuerungstechnisch gekoppelter elektrisch betriebener Servo-Kegelrad-Getriebemotor vorgesehen.

Die in der Bearbeitungsstation 2 angeordnete Trocknungseinrichtung ist vorteilhafter Weise als eine Warmlufttrocknung ausgelegt.

Die Erfindung soll nachstehend an einem Ausführungsbeispiel näher erläutert werden.
In der beigefügten Zeichnung zeigen:
- Fig. 1: eine schematische Draufsicht auf die Vorrichtung zur Bestückung und Ausrüstung von KfZ-Batteriegehäusen mit den Bearbeitungsstationen 1 bis 4 und dem zentral angeordneten Hub-Drehtisch sowie der Zuführstation für die auf Paketdicke geprüften Batterieplattenpakete;
- Fig. 2: eine schematische Draufsicht auf die Vorrichtung zur Bestückung und Ausrüstung von KfZ-Batteriegehäusen mit den Bearbeitungsstationen 1 bis 4 und dem zentral angeordneten Hub-Drehtisch;
- Fig. 3: eine schematische dreidimensionale Parallelansicht auf die Vorrichtung zur Bestückung und Ausrüstung von KfZ-Batteriegehäusen mit den Bearbeitungsstationen 1 bis 4 und dem zentral angeordneten Hub-Drehtisch;
- Fig. 4: eine separate schematische Ansicht der Bearbeitungsstation 1 mit Zuführband, Fahnenausrichter und Fahnenanbieger;
- Fig. 5: eine schematische dreidimensionale Ansicht auf einen Hub-Drehtisch ohne Kassettenträger für die Spannkassette;
- Fig. 6: schematisch Darstellung einer Spannkassette;

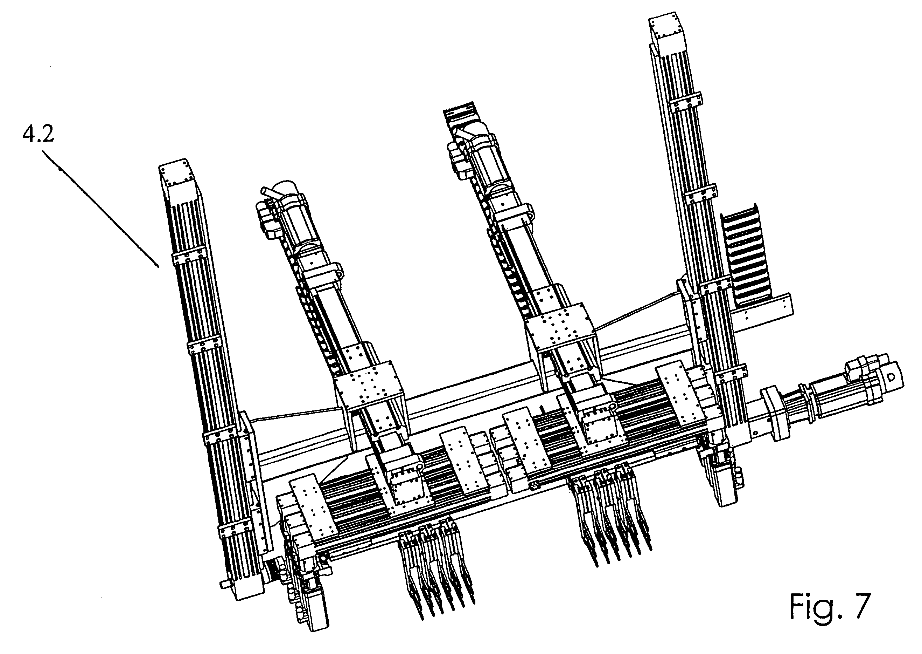

- Fig. 7: schematische Ansicht des Greiferportals der Bearbeitungsstation 4;

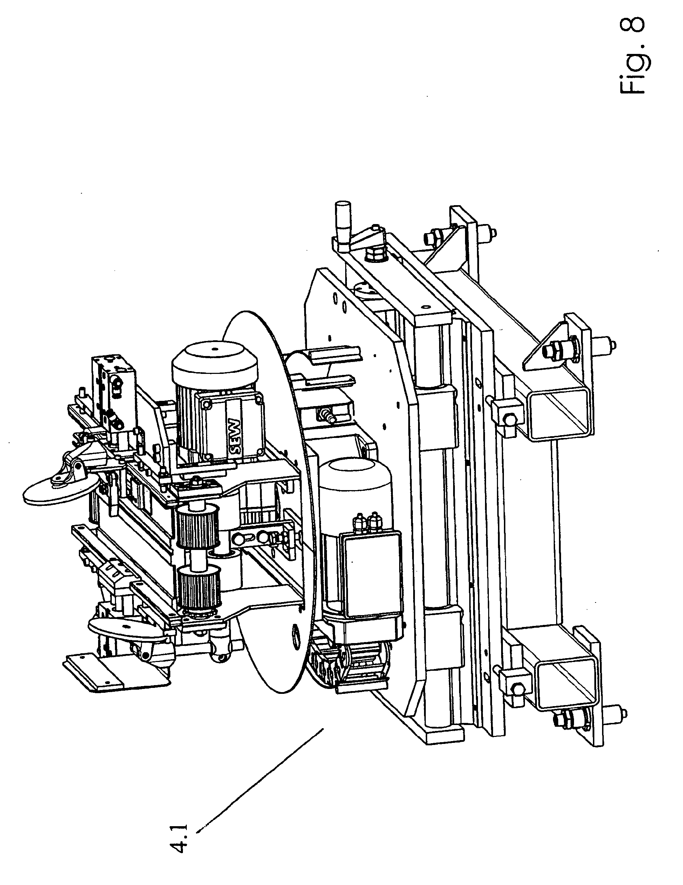

- Fig. 8: eine schematische dreidimensionale Ansicht auf einen Schwenkmechanismus für die Spannkassette und
- Fig. 9: eine schematische Draufsicht auf eine doppelt ausgelegte Vorrichtung zur Bestückung und Ausrüstung von KfZ-Batteriegehäusen mit den Bearbeitungsstationen 1 bis 4 und dem zentral angeordneten Hub-Drehtisch sowie den Zuführbändern für die auf Paketdicke geprüften Batterieplattenpakete.

### Ausführungsbeispiel:

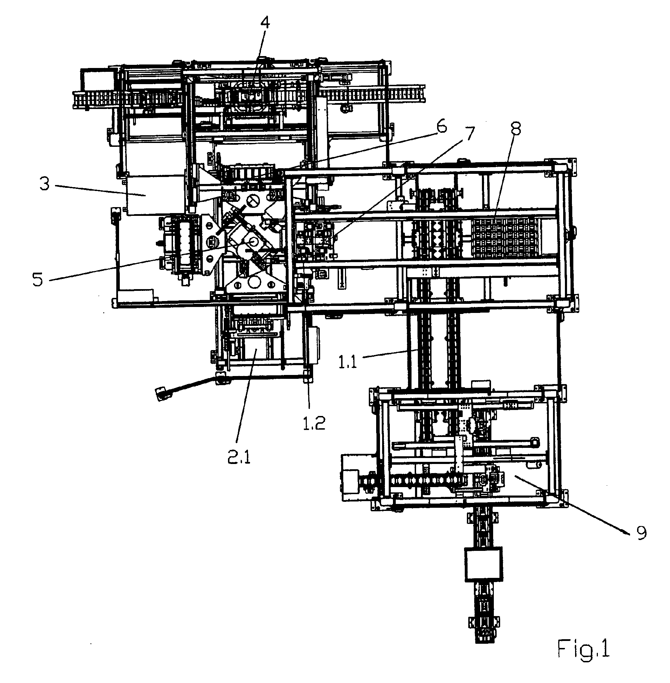

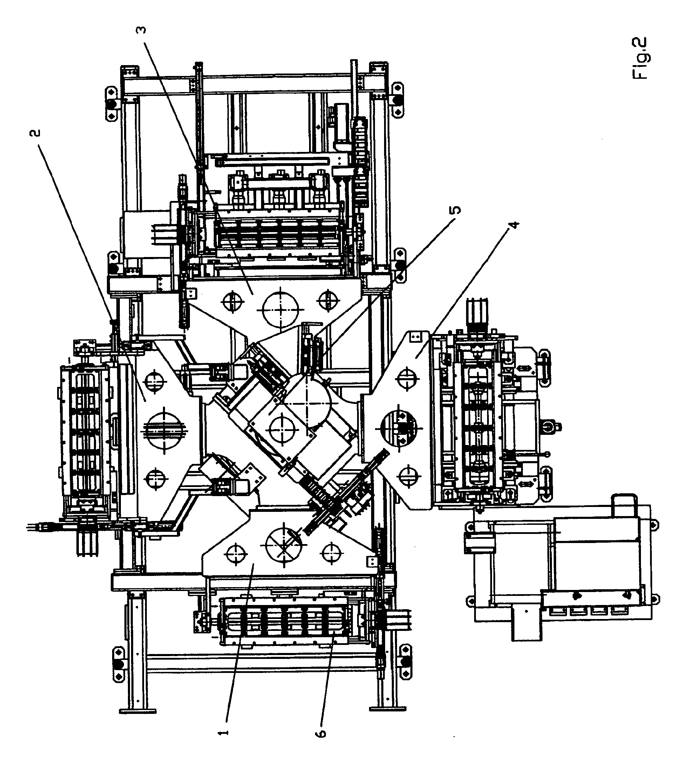

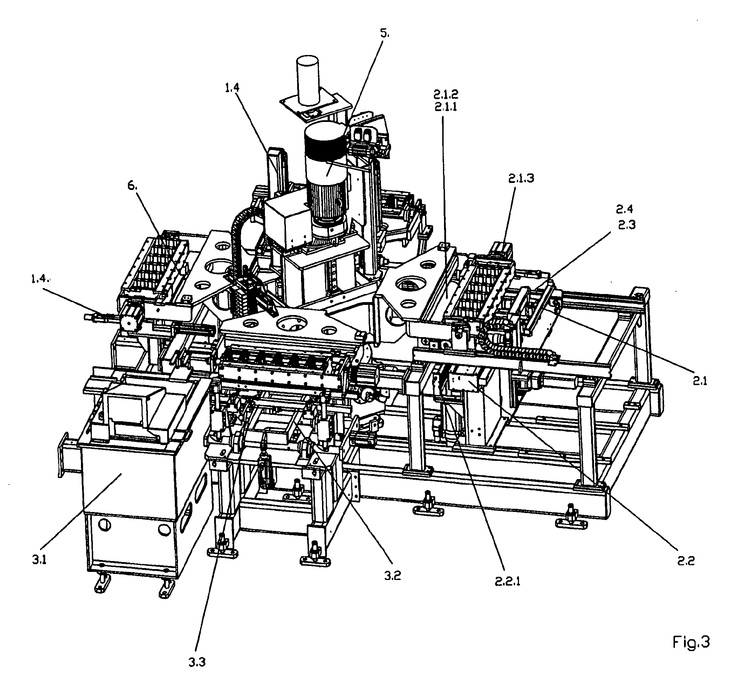

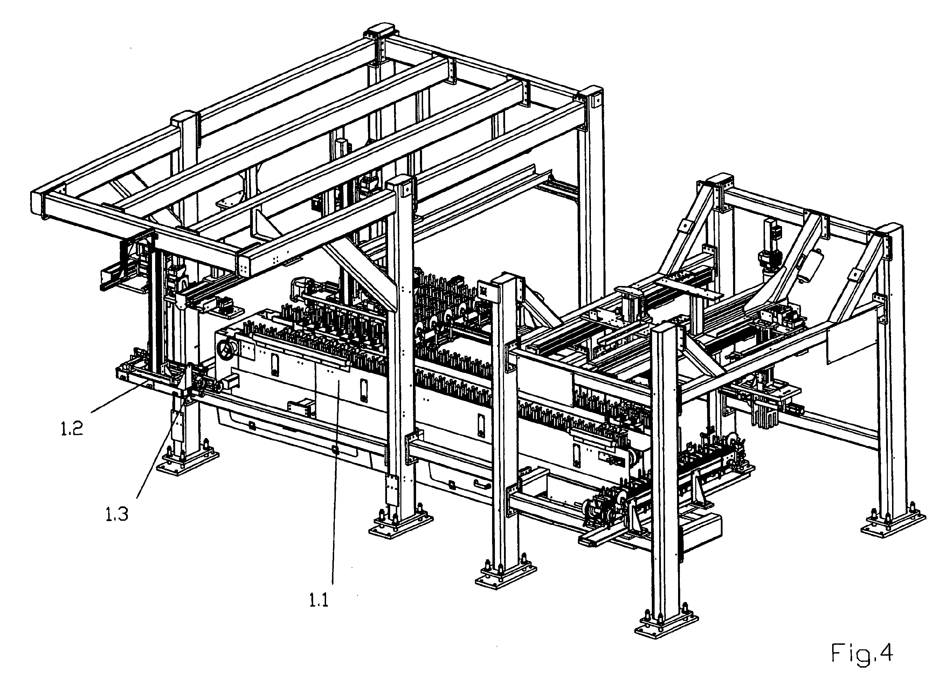

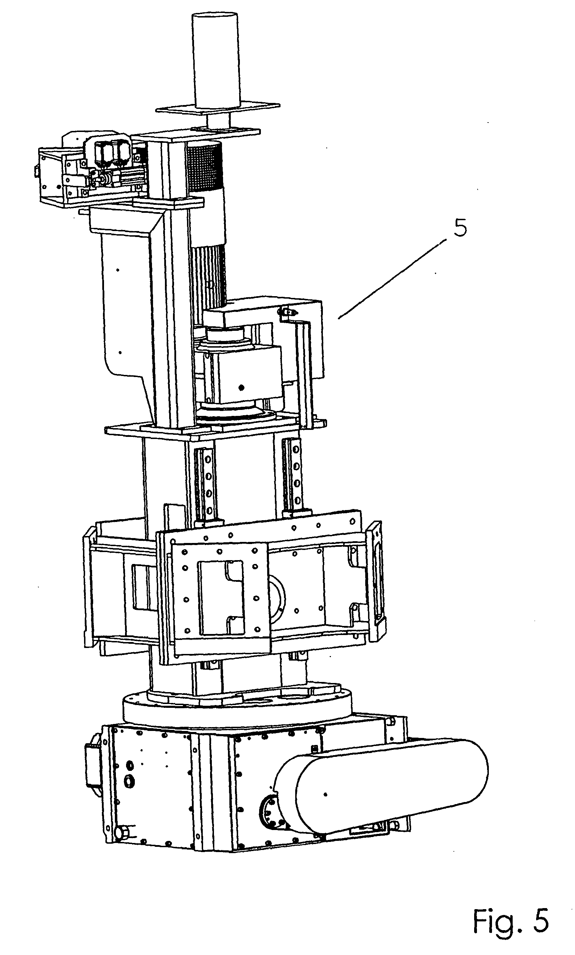

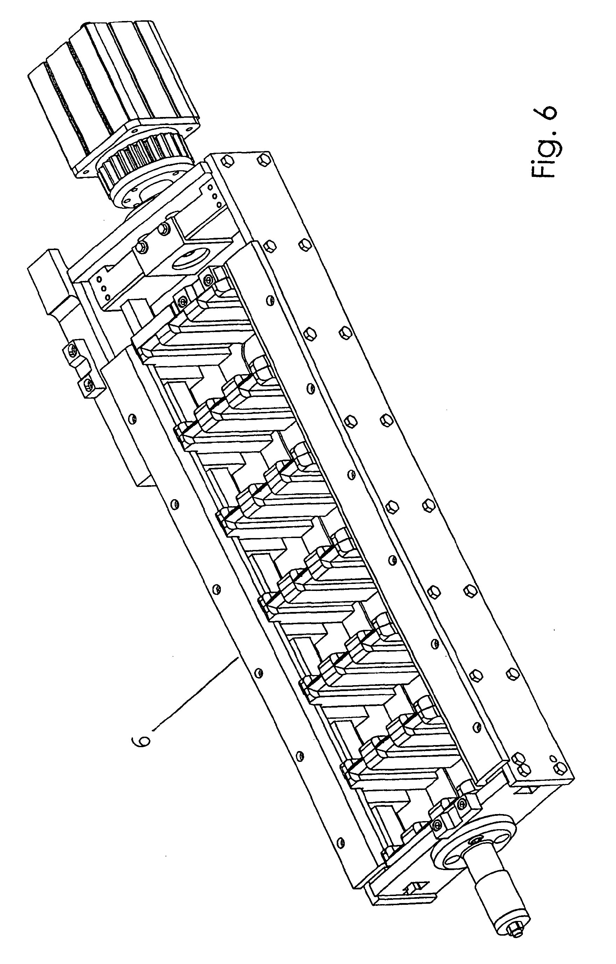

Gemäß der Figuren 1 bis 6 besteht eine Vorrichtung zur Bestückung und Ausrüstung von KfZ-Batteriegehäusen aus einzelnen Fertigungsstationen und dazugehörigen Transportvorrichtungen, wobei die zu bearbeitenden Batterieplattenpakete in Spannkassetten 6 angeordnet sind und der Anlage zur Weiterbearbeitung und zur Anordnung in die Batteriegehäuse in der notwendigen Paketbreite bereit gestellt sind.

Der Kompaktanlage vorgeschaltet ist eine Zuführstation 9 mit einem Sechsfachgreifer 7ausgestattet, welcher die auf dem Zuführband 9 zugeführten und bereits auf ihre notwendige Paketdicke geprüften Batterieplattenpakete den leeren Spannkassetten 6 der Bearbeitungsstation 1 oder, wenn dort kein Bedarf besteht, dem an der Zuführstation 9 angeordnetem Pufferband 8 zuordnet. Dazu verfügt die Zuführstation 9 über einen separaten Antrieb.
Als Herzstück verfügt die Kompaktanlage über einen zentral angeordneten elektrisch betätigten Hub-/Drehtisch 5, um den jeweils um 90° versetzt insgesamt vier Bearbeitungsstationen 1-4 angeordnet sind.
Der in der Bearbeitungsstation 1 und dort im Kassettenträger angeordneten bestückte Spannkassette ist oberhalb ein Fahnenausrichter 1.2 angeordnet, welcher zum Zwecke der Ausrichtung der Batterieplattenfahnen von oben nach unten abgesenkt und nach dem Ausrichten wieder angehoben und in seine Ausgangsposition positioniert wird.

Der in der Bearbeitungsstation 1 und dort im Kassettenträger angeordneten bestückte Spannkassette ist oberhalb ein Fahnenanbieger 1.3 angeordnet, welcher zum Zwecke der Anbiegung der Batterieplattenfahnen von oben nach unten abgesenkt und nach dem Anbiegen der jeweils äußeren Fahnen leicht nach Innen wieder angehoben und in seine Ausgangsposition positioniert wird.

Über die Hub-/Drehbewegung des Hub-/Drehtisches 5 wird die Spannkassette 6 im Kassettenträger zur Bearbeitungsstation 2 weitertransportiert und dieser übergeben.

Die Spannkassette 6 wird mittels des Schwenkmechanismus 2.4 um 180° gedreht. Über die von unten zuführ bare Fluxvorrichtung 2.1 werden die Fahnen der Batterieplatten mit Fluxmittel benetzt.
Dazu weist die Fluxvorrichtung 2.1 eine drehbare Walze 2.1.1 auf, welche über die Fahnen hinweg bewegt wird und dabei die Fahnen berührt und benetzt. Die Walze 2.1.1 wird dabei in einer Fluxmittelwanne netzt, welche sich unterhalb der Walze 2.1.1 befindet und mit welcher die Walze 2.1.1 im Mediumkontakt steht. Die Fluxmittelwanne 2.1.2 und die Walze 2.1.1 werden horizontal von der Spannkassette 6 mittels Servo-Kegelradgetriebemotor und Zahnstangenantrieb wegbewegt. Gleichzeitig wird das beheizte Zinnbad 2.2, welches unterhalb der positionierten Spannkassette 6 in der Bearbeitungsstation 2 angeordnet ist, nach oben gefahren bis die Fahnen der Batterieplatten eintauchen können und so verzinnt werden. Das Zinnbad 2.2 wird wieder abgesenkt. Dazu weisen Zinnbad 2.2 und Fluxmittelwanne 2.1.2 einen separaten Antrieb 2.1.3 auf. Mittels einer kippbar gelagerten Warmluft-Trocknungseinrichtung 2.3 werden die Fahnen getrocknet.

Beim Absenken des Zinnbades 2.2 streicht ein Abstreifer 2.2.1 über das Zinnbad 2.2 und streift dabei die sich absetzenden Zinnrückstände des Zinnbades 2.2 ab. Die Spannkassette 6 bleibt in dieser Position und wird mittels der Bewegungen des Hub-Drehtisches 5 zur Bearbeitungsstation 3 transportiert und dort positioniert.

In der Bearbeitungsstation 3 werden die elektrischen Brücken an die Batterieplatten der einzelnen Plattenpakete angegossen.
Dazu wird die Spannkassette 6 mittels separater pneumatischer Hubvorrichtung ausgehoben. Parallel dazu erfolgt das Ausstoßen der Gießbrücken in der Grießbrückenausstoßvorrichtung 3.3 mittels einer zweiten pneumatischen Hubbewegung.
Die beheizbare Bleiform 3.1 wird mittels der separaten Absetz-/Hubvorrichtung 3.2 für die Bleiform unter der Spannkassette 6 positioniert und die Spannkassette 6 wird mit den Fahnen nach unten gerichtet in die Bleiform 3.1 eingetaucht. Die Angußform wird dabei beheizt und die Steuerung regelt den Kühlkreislauf.
Nach dem Absenken der Bleiform 3.1 durch die Absetz-/Hubvorrichtung 3.2 erfolgt der Weitertransport der Spannkassette 6 mittels der Bewegungen des Hub-Drehtisches 5 zur Bearbeitungsstation 4.

Die Bearbeitungsstation 4 ist die Entnahmestation des Hub-/Drehtisches 5. Mittels des Greiferportals 4.2 der Einboxstation werden die fertig ausgerüsteten Batterieplattenpakete in die leeren Batteriekästen befördert und eingepresst. Dazu wird das mit insgesamt sechs Greifern ausgestattete Greiferportal 4.2 über der Spannkassette 6 abgesenkt.
Es werden immer 3 Batterieplattenpakete von jeweils drei Greifern entnommen und zur Einboxstation mit den auf dem Förderband bereitgestellten leeren Batteriegehäusen befördert. Dort werden diese mittels Spreizvorrichtung für die Batteriegehäuse und mittels eines zusätzlichen Druckstempels in die vorgesehenen Batteriezellen eingepresst.
Die drei leeren Greifer fahren zurück und die noch bestückten drei Greifer fahren über die Einboxstation mit den nächsten drei Batterieplattenpakten. Gleichzeitig wird das halbbestückte Batteriegehäuse mit dem Förderband mittels der dort angeordneten Drehvorrichtung um 180° gedreht und für die Aufnahme der nächsten drei Plattenpakete positioniert. Das fertig bestückte Batteriegehäuse 7 wird über das Förderband aus der Einboxstation und damit aus der Kompaktanlage auf eine Pufferstrecke befördert.

Zur notwendigen Reinigung der Einboxrahmen sind diese mindestens doppelt nebeneinander in einer Wechselvorrichtung angeordnet, so dass einer zum Bestücken zur Verfügung steht und ein weiterer während der Bestückung des anderen seitlich herausgefahren und gereinigt werden kann. Dies erfolgt kontinuierlich abwechselnd.
Zur Absicherung einer nachfolgenden Qualitätsprüfung und Dokumentierung ist an der Bearbeitungsstation 4 zusätzlich eine mit einer Waage für das Feststellen und Kontrollieren des Batteriegewichtes und mit einem der Zuordnung des ermittelten Gewichts zur entsprechenden Batterie dienenden Codeleser ausgestattete Kontrollstation zugeordnet. So können nicht vorschriftsmäßig bestückte Batteriegehäuse aussortiert werden.

Mit einer derartigen erfindungsgemäßen Vorrichtung ist eine Kompaktanlage zur Bestückung und Ausrüstung von KfZ-Batteriegehäusen geschaffen, die es ermöglicht, sowohl einreihige als auch doppelreihige Batteriegehäuse in einer Bearbeitungsanlage kontinuierlich zu bestücken und fertig zu bearbeiten.
Die Vorrichtung zeichnet sich durch die sternförmige Anordnung der einzelnen Bearbeitungsstationen um einen zentral angeordneten Hub-/Drehtisch durch einen äußerst geringen Platzbedarf aus. Ein Zwischentransport der unfertigen Plattenpakte außerhalb der Kompaktanlage ist ausgeschlossen. Auf Grund des taktgemäßen Weitertransports der einmal in einer Spannkassette positionierten Batterieplattenpakte zu den einzelnen Bearbeitungsstationen innerhalb der Kompaktanlage wird ein kontinuierlicher Ablauf der Fertigung gewährleistet.

### Ausführungsbeispiel 2:

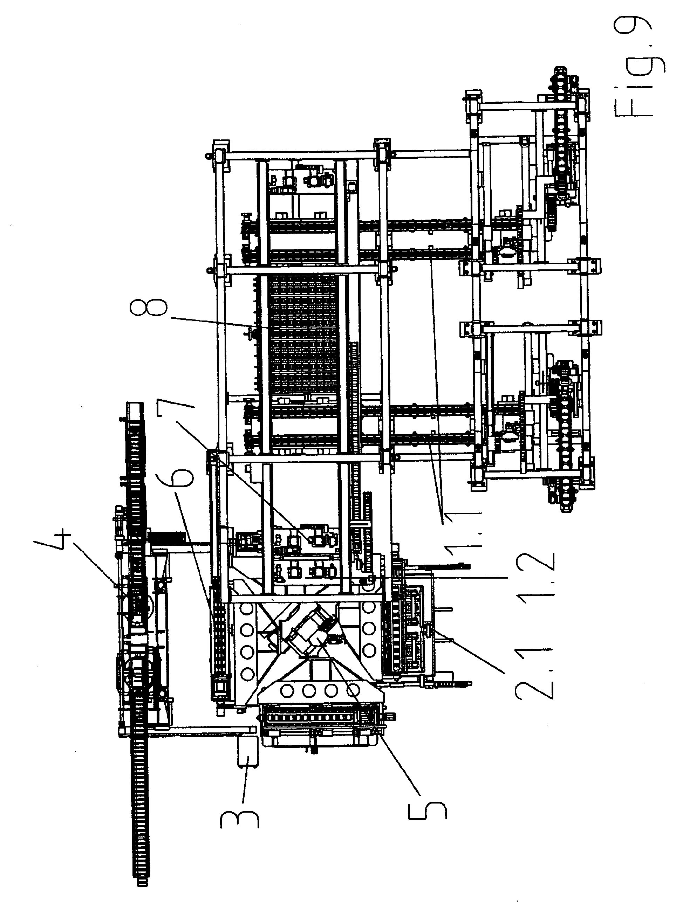

Um die Effizienz einer solchen Anlage zu erhöhen, besteht die Möglichkeit gemäß der Figur 9 die um einen Dreh-/Hubtisch 5 angeordneten Bearbeitungsstationen 1 - 4 mit mehreren separaten oder dimensional größeren Einzelbearbeitungsvorrichtungen auszustatten, so dass bei jedem Takt an jeder Bearbeitungsstation ein Mehrfaches an zu bearbeitenden Teilen gleichzeitig bearbeitet werden kann.
Dazu werden sowohl die Zuführvorrichtungen als auch die Transport- und Abführvorrichtungen entsprechend dimensioniert ausgebildet oder mehrfach angeordnet, wobei die einzelnen Bearbeitungsstationen gemäß dem Ausführungsbeispiel 1 ausgebildet und angeordnet sind.

Zur Einhaltung der Taktzeiten bei mehrfach ausgelegter Bearbeitungsstation ist es jedoch von Vorteil, dass der Bearbeitungsstation 4 zusätzlich eine der gleichzeitigen Positionierung von mindestens zwei leeren bzw. befüllten Batteriegehäusen an der Einboxstation dienende Transfervorrichtung zugeordnet ist. Mittels zusätzlicher Greifer werden mindestens zwei Batteriegehäuse gleichzeitig aufgenommen, weitertransportiert und an der gewünschten Stelle abgesetzt.,

Zur Absicherung einer nachfolgenden Qualitätsprüfung und Dokumentierung ist an der Bearbeitungsstation 4 zusätzlich eine mit einer Waage für das Feststellen und Kontrollieren des Batteriegewichtes und mit einem der Zuordnung des ermittelten Gewichts zur entsprechenden Batterie dienenden Codeleser ausgestattete Kontrollstation zugeordnet. So können nicht vorschriftsmäßig bestückte Batteriegehäuse aussortiert werden.

Mit einer derartigen erfindungsgemäßen Vorrichtung ist eine Kompaktanlage zur Bestückung und Ausrüstung von KfZ-Batteriegehäusen so ausgelegt, dass zusätzlich zu den Vorteilen der im Ausführungsbeispiel 1 ausgeführte Anlage in der annähernd gleichen Taktfrequenz wenigstens doppelt effizient produziert werden kann.

### Bezugszeichenliste

- 1: Bearbeitungsstation 1
- 1.1: Zuführband
- 1.2: senkbarer Fahnenausrichter
- 1.3: senkbarer Fahnenanbieger
- 1.4: Schwenkmechanismus
- 2: Bearbeitungsstation 2
- 2.1: Fluxvorrichtung
- 2.1.1: Walze
- 2.1.2: Fluxmittelwanne
- 2.1.3: separater Antrieb für Walze und Fluxmittelwanne
- 2.2: hebbares Zinnbad
- 2.2.1: Abstreifer
- 2.3: Trocknungseinrichtung
- 2.4: Schwenkmechanismus
- 3: Bearbeitungsstation 3
- 3.1: beheizbare Bleiform
- 3.2: Absetz-/Hubvorrichtung für Bleiform
- 3.3: Gießbrückenausstoßvorrichtung
- 4: Bearbeitungsstation 4
- 4.1: Schwenkmechanismus
- 4.2: Greiferportal
- 5: Hub-/Drehtisch
- 6: Spannkassetten
- 7: Mehrfachgreifer
- 8: Pufferstation
- 9: Zuführstation

## Patentansprüche

1. Vorrichtung zur Bestückung und Ausrüstung von KfZ-Batteriegehäusen als Kompaktanlage, bestehend aus einzelnen Fertigungsstationen und dazugehörigen Transportvorrichtungen, wobei die zu bearbeitenden Batterieplattenpakete in Spannkassetten (6) angeordnet sind und der Vorrichtung in der notwendigen Paketbreite bereit gestellt sind **dadurch gekennzeichnet,**
**dass** insgesamt vier Bearbeitungsstationen (1, 2, 3, 4) um einen elektrisch angetriebenen Hub-/Drehtisch (5) angeordnet sind,
**dass** die vier Bearbeitungsstationen (1, 2, 3, 4) jeweils um 90° versetzt um den Hub-Drehtisch (5) herum angeordnet sind,
**dass** an der Bearbeitungsstation (1)
- wenigstens ein dem Zuführen von mit geprüften Batterieplatten bestückten Spannkassetten (6) dienendes Zuführband (1.1),
- ein oder mehrere von oben absenkbarer Fahnenausrichter (1.2)
- ein oder mehrere von oben absenkbarer Fahnenanbieger (1.3) und
- ein dem Schwenken der Spannkassetten (6) um 180° dienender und nach dem Senken des Hub-Drehtisches betätigbarer Schwenkmechanismus (1.4)
angeordnet sind,
**dass** an der Bearbeitungsstation (2)
- ein oder mehrere dem Benetzen der Fahnen der Batterieplatten mit Flussmittel (Fluxmittel) dienende und von unten an die Spannkassetten (6) zuführbare Fluxvorrichtung (2.1),
- ein oder mehrere dem Verzinnen der Fahnen der Batterieplatten dienendes, beheiztes und von unten nach oben heb- und senkbares Zinnbad (2.2) mit einem oder mehreren dem Entfernen des Oxidates dienendem Abstreifer (2.2.1),
- eine dem Trocknen der verzinnten Fahnen dienende kippbar gelagerte Trocknungseinrichtung (2.3) und
- ein dem Schwenken der Spannkassetten (6) um 180° dienender und nach dem Senken des Hub-Drehtisches betätig barer Schwenkmechanismus (2.4)
angeordnet sind,
**dass** an der Bearbeitungsstation (3)
- wenigstens eine Gießbrückenausstoßvorrichtung (3.3) mit separater pneumatischer Hubvorrichtung,
- ein oder mehrere unter der Spannkassette (6) angeordnete beheizbare Bleiformen (3.1) und
- wenigstens eine für das Eintauchen der mit den Fahnen nach unten gedrehten Spannkassette in die Bleiform (3.1) dienende Absetz-/Hubvorrichtung (3.2)
angeordnet sind,
**dass** an der Bearbeitungsstation (4)
- wenigstens ein beim Absenken des Hub-Drehtisches (5) betätigbarer Schwenkmechanismus (4.1),
- ein oder mehrere mit wenigstens sechs Greifern ausgestattetes, zu den Spannkassetten (6) absenkbares und der Entnahme der Batterieplattenpakete dienendes Greiferportal (4.2),
- wenigstens zwei Einboxrahmen und
- ein oder mehrere zum Transport und zum Drehen der bereitgestellten Batteriegehäuse (7) dienende und mit einer Drehvorrichtung ausgestattete Förderbänder
angeordnet sind.

2. Vorrichtung zur Bestückung und Ausrüstung von KfZ-Batteriegehäusen nach dem Anspruch 1, **dadurch gekennzeichnet, dass** der Hub-/Drehtisch als Rundschalttisch mit elektrisch bewegter Hubeinheit ausgebildet ist.

3. Vorrichtung zur Bestückung und Ausrüstung von KfZ-Batteriegehäusen nach einem der Ansprüche 1 und 2, **dadurch gekennzeichnet, dass** am Hub-/Drehtisch (5) jeweils um 90° versetzt mindestens vier Kassettenträger (5.1) angeordnet sind.

4. Vorrichtung zur Bestückung und Ausrüstung von KfZ-Batteriegehäusen nach einem der Ansprüche 1 bis 3, **dadurch gekennzeichnet, dass** an den an mindestens drei Bearbeitungsstationen angeordneten Schwenkmechanismen (1.4,2.4,4.1) ein dem Drehen der Spannkassetten (6) um 180° dienender pneumatisch oder elektrisch betriebener Zahnstangenantrieb (6.2.) angeordnet ist.

5. Vorrichtung zur Bestückung und Ausrüstung von KfZ-Batteriegehäusen nach einem der Ansprüche 1 bis 4, **dadurch gekennzeichnet, dass** zwischen der Bearbeitungsstation 1 und der vorgeschalteten Zuführstation (9) von auf Dicke geprüften Batterieplattenpaketen ein der Bestückung der Spannkassette (6) mit den geprüften Paketen von Batterieplatten dienender Mehrfachgreifer (7) angeordnet ist.

6. Vorrichtung zur Bestückung und Ausrüstung von KfZ-Batteriegehäusen nach einem der Ansprüche 1 bis 5, **dadurch gekennzeichnet, dass** der Bearbeitungsstation (1) in der vorgeschalteten Zuführstation (9) mindestens eine Pufferstation (8) zugeordnet ist.

7. Vorrichtung zur Bestückung und Ausrüstung von KfZ-Batteriegehäusen nach einem der Ansprüche 1 bis 6, **dadurch gekennzeichnet, dass** an der Fluxvorrichtung (2.1) ein separater Antrieb (2.1.3) für die jeweils horizontal unter die Spannkassette (6) verfahrbare Walze (2.1.1.) und die verfahrbare Fluxmittelwanne (2.1.2.) angeordnet ist.

8. Vorrichtung zur Bestückung und Ausrüstung von KfZ-Batteriegehäusen nach dem Anspruch 7, **dadurch gekennzeichnet, dass** als separater Antrieb (2.1.3) ein mit einer Zahnstange in Verbindung stehender und mit dem Hub-/Drehtisch (5) steuerungstechnisch gekoppelter elektrisch betriebener Servo-Kegelrad-Getriebemotor angeordnet ist.

9. Vorrichtung zur Bestückung und Ausrüstung von KfZ-Batteriegehäusen nach einem der Ansprüche 1 bis 8, **dadurch gekennzeichnet, dass** die Trocknungseinrichtung (2.3) als Warmlufttrocknung ausgebildet ist.

10. Vorrichtung zur Bestückung und Ausrüstung von KfZ-Batteriegehäusen nach einem der Ansprüche 1 bis 9, **dadurch gekennzeichnet, dass** die Einboxrahmen der Bearbeitungsstation (4) auf einer der Reinigung während des Bearbeitungsprozesses dienenden Wechselstation angeordnet sind.

11. Vorrichtung zur Bestückung und Ausrüstung von KfZ-Batteriegehäusen nach einem der Ansprüche 1 bis 10, **dadurch gekennzeichnet, dass** der Bearbeitungsstation 4 zusätzlich eine der gleichzeitigen Positionierung von mindestens zwei leeren bzw. befüllten Batteriegehäusen an der Einboxstation dienende Transfervorrichtung zugeordnet ist.

12. Vorrichtung zur Bestückung und Ausrüstung von KfZ-Batteriegehäusen nach einem der Ansprüche 1 bis 11, **dadurch gekennzeichnet, dass** an der Bearbeitungsstation 4 zusätzlich eine mit einer Waage für das Feststellen und Kontrollieren des Batteriegewichtes und einem der Zuordnung des ermittelten Gewichts zur entsprechenden Batterie dienendem Codeleser ausgestattete Kontrollstation zugeordnet ist.

## Claims

1. Device for fitting and equipping motor vehicle battery housings as a compact system, composed of individual fabrication stations and associated transport devices, wherein the battery plate packs which are to be processed are arranged in clamping cartridges (6) and are made available to the device with the necessary pack width, **characterized**
**in that** a total of four processing stations (1, 2, 3, 4) are arranged about an electrically driven lifting/rotary table (5),
**in that** the four processing stations (1, 2, 3, 4) are each arranged offset through 90° around the lifting/rotary table (5),
**in that**
- at least one feed belt (1.1) which serves to feed clamping cartridges (6) fitted with tested battery plates,
- one or more lug aligners (1.2) which can be lowered from above,
- one or more lug benders (1.3) which can be lowered from above, and
- a pivoting mechanism (1.4) which serves to pivot the clamping cartridges (6) through 180° and can be actuated after the lowering of the lifting/rotary table
are arranged at the processing station (1),
**in that**
- one or more fluxing devices (2.1) which serve to wet the lugs of the battery plates with fluxing agent and can be fed to the clamping cartridges (6) from below,
- one or more tin baths (2.2) which serve to tin-plate the lugs of the battery plates, are heated, can be raised from below in an upward direction and lowered and have one or more strippers (2.2.1) which serve to remove the oxidate,
- a drying device (2.3) which serves to dry the tin-plated lugs and is mounted in a tiltable fashion, and
- a pivoting mechanism (2.4) which serves to pivot the clamping cartridges (6) through 180° and can be actuated after the lowering of the lifting/rotary table
are arranged at the processing station (2),
**in that**
- at least one casting bridge discharge device (3.3) with a separate pneumatic lifting device,
- one or more heatable lead molds (3.1) which are arranged under the clamping cartridge (6), and
- at least one setting down/lifting device (3.2) which serves to dip the clamping cartridge, rotated downward with the lugs, into the lead mold (3.1)
are arranged at the processing station (3),
**in that**
- at least one pivoting mechanism (4.1) which can be actuated when the lifting/rotary table (5) is lowered,
- one or more gripper gantries (4.2) which are equipped with at least six grippers, can be lowered to the clamping cartridges (6) and serve to remove the battery plate packs,
- at least two boxing-in frames, and
- one or more conveyor belts which serve to transport and to rotate the battery housings (7), which are made available, and are equipped with a rotary device
are arranged at the processing station (4).

2. Device for fitting and equipping motor vehicle battery housings according to Claim 1, **characterized in that** the lifting/rotary table is embodied as a rotary indexing table with an electrically moved lifting unit.

3. Device for fitting and equipping motor vehicle battery housings according to one of Claims 1 and 2, **characterized in that** at least four cartridge carriers (5.1) are arranged, each offset through 90°, at the lifting/rotary table (5).

4. Device for fitting and equipping motor vehicle battery housings according to one of Claims 1 to 3, **characterized in that** a toothed rack drive (6.2) which serves to rotate the clamping cartridges (6) through 180° and is operated pneumatically or electrically is arranged at the pivoting mechanisms (1.4, 2.4, 4.1) which are arranged at at least three processing stations.

5. Device for fitting and equipping motor vehicle battery housings according to one of Claims 1 to 4, **characterized in that** a multiple gripper (7) which serves to fit the clamping cartridge (6) with the tested packs of battery plates is arranged between the processing station (1) and the feed station (9), connected upstream, of battery plate packs whose thickness is tested.

6. Device for fitting and equipping motor vehicle battery housings according to one of Claims 1 to 5, **characterized in that** at least one buffer station (8) is assigned to the processing station (1) in the feed station (9) which is connected upstream.

7. Device for fitting and equipping motor vehicle battery housings according to one of Claims 1 to 6, **characterized in that** a separate drive (2.1.3) for the roller (2.1.1) and the fluxing agent basin (2.1.2) which can each be moved horizontally under the clamping cartridge (6) is arranged at the fluxing device (2.1).

8. Device for fitting and equipping motor vehicle battery housings according to Claim 7, **characterized in that** an electrically operated servo bevel wheel geared motor which is connected to a toothed rack and is coupled in terms of control to the lifting/rotary table (5) is arranged as a separate drive (2.1.3).

9. Device for fitting and equipping motor vehicle battery housings according to one of Claims 1 to 8, **characterized in that** the drying device (2.3) is embodied as a warm air dryer.

10. Device for fitting and equipping motor vehicle battery housings according to one of Claims 1 to 9, **characterized in that** the boxing-in frames of the processing station (4) are arranged on a changing station which serves for cleaning during the processing operation.

11. Device for fitting and equipping motor vehicle battery housings according to one of Claims 1 to 10, **characterized in that** in addition a transfer device which serves for simultaneously positioning at least two empty or filled the battery housings at the boxing-in station is assigned to the processing station (4).

12. Device for fitting and equipping motor vehicle battery housings according to one of Claims 1 to 11, **characterized in that** in addition a monitoring station which is equipped with a balance for determining and monitoring the battery weight and with a code reader which serves to assign the determined weight to the corresponding battery is assigned to the processing station (4).

## Revendications

1. Dispositif pour garnir et équiper des boîtiers de batterie d'automobile sous la forme d'une installation compacte, composé de stations de fabrication individuelles et de dispositifs de transport associés, les paquets de plaques de batterie à traiter étant disposés dans des cassettes de serrage (6) et présentés au dispositif dans la largeur de paquet nécessaire, **caractérisé en ce**
**qu'**un total de quatre stations de traitement (1, 2, 3, 4) sont disposées autour d'une table levable/tournante (5) à entraînement électrique,
**que** les quatre stations de traitement (1, 2, 3, 4) sont disposées autour de la table levable/tournante (5) en étant respectivement décalées de 90°,
**que** sur la station de traitement (1) sont disposés
- au moins une bande d'amenée (1.1) servant à l'amenée de cassettes de serrage (6) garnies de plaques de batterie contrôlées,
- un ou plusieurs éléments d'alignement de talon (1.2) pouvant être abaissés par le haut,
- un ou plusieurs éléments de pliage de talon (1.3) pouvant être abaissés par le haut et
- un mécanisme de pivotement (1.4) servant à faire pivoter les cassettes de serrage (6) de 180° et pouvant être actionné après avoir abaissé la table levable/tournante,
**que** sur la station de traitement (2) sont disposés
- un ou plusieurs dispositifs de fluxage (2.1) servant à mouiller les talons des plaques de batterie avec un agent de fluxage et pouvant être approchés des cassettes de serrage (6) par le bas,
- un ou plusieurs bains d'étain (2.2) servant à l'étamage des talons des plaques de batterie , chauffés et pouvant être relevés et abaissés du bas vers le haut, munis d'un ou plusieurs racleurs (2.2.1) servant à éliminer les oxydats,
- un équipement de séchage (2.3) logé de manière basculante et servant au séchage des talons étamés et
- un mécanisme de pivotement (2.4) servant à faire pivoter les cassettes de serrage (6) de 180° et pouvant être actionné après avoir abaissé la table levable/tournante,
**que** sur la station de traitement (3) sont disposés
- au moins un dispositif d'éjection des ponts de coulée (3.3) muni d'un dispositif de levage pneumatique séparé,
- un ou plusieurs moules à plomb (3.1) chauffants disposés sous la cassette de serrage (6) et
- au moins un dispositif de dépose/levable (3.2) servant à l'immersion dans le moule à plomb (3.1) de la cassette de serrage tournée avec les talons vers le bas,
**que** sur la station de traitement (4) sont disposés
- au moins un mécanisme de pivotement (4.1) pouvant être actionné lors de la descente de la table levable/tournante (5),
- un ou plusieurs portiques à griffes (4.2), équipés d'au moins six griffes, pouvant être abaissés vers les cassettes de serrage (6) et servant à retirer les paquets de plaques de batterie,
- au moins deux cadres d'enchâssement et
- une ou plusieurs bandes transporteuses servant à transporter et à faire tourner les boîtiers de batterie (7) présentés et équipées d'un dispositif de rotation.

2. Dispositif pour garnir et équiper des boîtiers de batterie d'automobile selon la revendication 1, **caractérisé en ce que** la table levable/tournante est réalisée sous la forme d'une table à transfert circulaire munie d'une unité de levage déplacée électriquement.

3. Dispositif pour garnir et équiper des boîtiers de batterie d'automobile selon la revendication 1 ou 2, **caractérisé en ce qu'**au moins quatre porte-cassettes (5.1) respectivement décalés de 90° sont disposés sur la table levable/tournante (5).

4. Dispositif pour garnir et équiper des boîtiers de batterie d'automobile selon l'une des revendications 1 à 3, **caractérisé en ce qu'**un mécanisme d'entraînement à crémaillère (6.2) à actionnement pneumatique ou électrique, servant à la rotation des cassettes de serrage (6) de 180°, est disposé sur les mécanismes de pivotement (1.4, 2.4, 4.1) disposés sur au moins trois stations de traitement.

5. Dispositif pour garnir et équiper des boîtiers de batterie d'automobile selon l'une des revendications 1 à 4, **caractérisé en ce qu'**entre la station de traitement 1 et la station d'amenée (9) des paquets de plaques de batterie dont l'épaisseur a été contrôlée montée en amont est disposée une griffe multiple (7) servant à garnir la cassette de serrage (6) avec les paquets contrôlés de plaques de batterie.

6. Dispositif pour garnir et équiper des boîtiers de batterie d'automobile selon l'une des revendications 1 à 5, **caractérisé en ce qu'**au moins une station tampon (8) est associée à la station de traitement (1) dans la station d'amenée (9) montée en amont.

7. Dispositif pour garnir et équiper des boîtiers de batterie d'automobile selon l'une des revendications 1 à 6, **caractérisé en ce que** sur le dispositif de fluxage (2.1) est disposé un mécanisme d'entraînement (2.1.3) séparé pour le cylindre (2.1.1) qui peut à chaque fois être déplacé horizontalement sous la cassette de serrage (6) et le bac à agent de fluxage (2.1.2) mobile.

8. Dispositif pour garnir et équiper des boîtiers de batterie d'automobile selon la revendication 7, **caractérisé en ce que** le mécanisme d'entraînement (2.1.3) séparé monté est un motoréducteur asservi à pignon conique à actionnement électrique, en liaison avec une crémaillère et accouplé par technique de commande avec la table levable/tournante (5).

9. Dispositif pour garnir et équiper des boîtiers de batterie d'automobile selon l'une des revendications 1 à 8, **caractérisé en ce que** l'équipement de séchage (2.3) est réalisé sous la forme d'un séchage à air chaud.

10. Dispositif pour garnir et équiper des boîtiers de batterie d'automobile selon l'une des revendications 1 à 9, **caractérisé en ce que** les cadres d'enchâssement de la station de traitement (4) sont disposés sur une station de transfert servant au nettoyage pendant le processus de traitement.

11. Dispositif pour garnir et équiper des boîtiers de batterie d'automobile selon l'une des revendications 1 à 10, **caractérisé en ce qu'**un dispositif de transfert servant au positionnement simultané d'au moins deux boîtiers de batterie vides ou remplis sur la station d'enchâssement est en outre associé à la station de traitement (4).

12. Dispositif pour garnir et équiper des boîtiers de batterie d'automobile selon l'une des revendications 1 à 11, **caractérisé en ce qu'**une station de contrôle équipée d'une balance pour déterminer et contrôler le poids de la batterie et d'un lecteur de code servant à associer le poids déterminé à la batterie correspondante est en outre associée à la station de traitement (4).
